# EUROPÄISCHE PATENTSCHRIFT

(11) **EP 1 591 802 B1**
(45) Veröffentlichungstag und Bekanntmachung des Hinweises auf die Patenterteilung: **21.06.2006**
(21) Anmeldenummer: 05008010.0
(22) Anmeldetag: 13.04.2005
(51) Int. Cl.: G01V 8/10

(54) **Vorrichtung zur Ausrichtung eines optischen Sensors**
Alignement device for an optical sensor
Dispositif d'alignement d'un capteur optique

(30) Priorität: 27.04.2004 DE 102004020628
(43) Veröffentlichungstag der Anmeldung: 02.11.2005
(73) Patentinhaber: Leuze electronic GmbH + Co KG, 73277 Owen/Teck (DE)
(72) Erfinder: Dümmel, Thomas, 72584 Hülben (DE); Wolf, Tilo, 73240 Wendlingen (DE)
(74) Vertreter: Ruckh, Rainer Gerhard

(56) Entgegenhaltungen:
- DE-A1- 19 700 478
- DE-A1- 19 757 461
- FR-A- 2 041 435

## Beschreibung

Die Erfindung betrifft eine Vorrichtung zur Ausrichtung eines optischen Sensors.

Eine derartige Vorrichtung zur Ausrichtung von als Lichtschranken, Lichtgittern oder Lichtvorhängen ausgebildeten optischen Sensoren ist aus der DE 197 00 478 A1 oder der DE 197 57 461 A1 bekannt.

Derartige optische Sensoren weisen wenigstens ein in einem ersten Gehäuse integriertes, Sendelichtstrahlen emittierendes Sendeelement und wenigstens ein in einem zweiten Gehäuse integriertes Empfangselement auf, wobei jedes Gehäuse mittels einer Befestigungsvorrichtung an einer Unterlage befestigbar ist. Wenigstens ein Gehäuse sitzt auf einer Bodenplatte der Befestigungsvorrichtung auf, wobei die Bodenplatte bezüglich dem Unterteil der Befestigungsvorrichtung in ihrer Neigung verstellbar und drehbar gelagert ist. Erste und zweite Einstellmittel sind an der Oberseite der Befestigungsvorrichtung betätigbar angeordnet und dienen zur Einstellung des Drehwinkels beziehungsweise der Neigung der Bodenplatte.

Die Bodenplatte der Befestigungsvorrichtung liegt in einer im Wesentlichen horizontalen Ebene. Die Längsachse des darauf aufsitzenden Gehäuses des optischen Sensors mit dem Sendeelement verläuft im Wesentlichen in vertikaler Richtung. Die optische Achse der vom Sendeelement emittierten Sendelichtstrahlen verläuft im Wesentlichen in horizontaler Richtung.

Durch Neigen und Drehen der Bodenplatte gegenüber der Unterlage kann die Lage der optischen Achse der Sendelichtstrahlen eingestellt werden, dass die Sendelichtstrahlen exakt auf das zugeordnete Empfangselement im gegenüberliegenden Gehäuse geführt sind.

Allerdings ändern sich bei dieser Einstellung die Abstände der Gehäuse zueinander. Derartige Abstandsänderungen sind jedoch insbesondere dann unerwünscht, wenn mit dem optischen Sensor Distanzen von Objekten bestimmt werden sollen. Wird bei einer derartigen Distanzmessung eine hohe Messgenauigkeit gefordert, so muss ein möglichst exakter, fest vorgegebener Bezugspunkt des optischen Sensors gegeben sein, der durch einen Justagevorgang nicht verändert werden darf.

Der Erfindung liegt die Aufgabe zugrunde eine Vorrichtung zur Ausrichtung eines optischen Sensors bereitzustellen, bei welcher während der Justage ein definierter Bezugspunkt des optischen Sensors erhalten bleibt.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Ausrichtung eines optischen Sensors, welcher einen in einem Gehäuse integrierten, längs einer optischen Achse Sendelichtstrahlen emittierenden Sender aufweist. Die erfindungsgemäße Vorrichtung umfasst eine Taumelplatte, welche mit dem Gehäuse des optischen Sensors verbunden ist. Ebenso weist die erfindungsgemäße Vorrichtung eine Unterlage und ein zwischen dieser und der Taumelplatte angeordnetes Auflageelement auf, wobei die Unterlage oder die Taumelplatte auf einem in der optischen Achse liegenden Kipppunkt des Auflageelements aufliegt, so dass die Taumelplatte um den Kipppunkt relativ zur Unterlage kippbar ist. Weiter weist die erfindungsgemäße Vorrichtung die Taumelplatte und die Unterlage verbindende Kopplungselemente zur Fixierung einer Sollposition der Taumelplatte relativ zur Unterlage auf.

Da die optische Achse des optischen Sensors durch den Kipppunkt verläuft, bezüglich dessen die Taumelung der Taumelplatte erfolgt, bleibt der Bezugspunkt der optischen Achse während der Ausrichtung des optischen Sensors erhalten. Für den Fall, dass der optische Sensor als Distanzsensor ausgebildet ist, welcher gegen vorgegebene Ziele wie zum Beispiel ortsfest angeordnete Reflektoren Distanzmessungen durchführt, ist damit gewährleistet, dass die Messentfemung gegenüber derartigen Zielen während der Ausrichtung durch Verstellen der Taumelplatte erhalten bleibt.

Mit der erfindungsgemäßen Vorrichtung wird somit eine exakte Ausrichtung des optischen Sensors ohne Veränderung des Bezugspunkts zur Durchführung der Objektdetektion, insbesondere der Durchführung einer Distanzmessung gewährleistet. Dabei weist die erfindungsgemäße Vorrichtung einen einfachen und kostengünstigen Aufbau auf.

Die Taumelplatte bildet besonders vorteilhaft eine Baueinheit mit dem Gehäuse des optischen Sensors. Diese Baueinheit ist kostengünstig herstellbar, zudem entfallen separate Bauteile zur Fixierung des Gehäuses in einer vorgegebenen Sollposition bezüglich der Taumelplatte.

Die Unterlage kann prinzipiell von einer Oberfläche einer Maschine, einer Wand eines Gehäuses, eines Regals oder dergleichen gebildet sein. Besonders vorteilhaft ist die Unterlage von einer separaten Platte gebildet, so dass diese mit der Taumelplatte eine transportable Vorrichtung bildet, die flexibel an unterschiedchen Auflagen montiert werden kann.

An der Platte oder an der Taumelplatte sitzt in einer vorteilhaften Ausführungsform als Auflageelement ein Sockel auf, dessen oberer Scheitelpunkt den Kipppunkt definiert. Dabei ist das obere Ende des Sockels als Kugelsegment ausgebildet, so dass die dort aufliegende Platte oder Taumelplatte in allen Richtungen geschwenkt werden kann.

In einer besonders vorteilhaften Ausführungsform ist der Sockel einstückig mit der Taumelplatte, welche Bestandteil des Gehäuses des Sensors ist, ausgebildet. Diese ausgebildete Bauform weist eine besonders kompakte Bauform auf und ist zudem kostengünstig herstellbar.

Die Taumelplatte und die Unterlage, insbesondere die Platte, sind über Kopplungselemente verbunden, die in einer besonders einfachen und kostengünstigen Variante als Schrauben ausgebildet sind. Diese Schrauben durchsetzen die Taumelplatte und greifen in die Unterlage beziehungsweise die Platte. Die Schrauben sind somit einfach und bedienerfreundlich von der Oberseite der Taumelplatte, auf welcher das Gehäuse des optischen Sensors aufsitzt, betätigbar.

Durch eine federnde Lagerung wenigstens eines der Kopplungselemente sowie gegebenenfalls einer Federung zwischen Taumelplatte und Unterlage im Bereich des Auflageelements kann durch Betätigung der Kopplungselemente zur exakten Justage des optischen Sensors die Taumelplatte gezielt in unterschiedlichen Raumwinkeln geneigt und in der gewünschten Sollposition fixiert werden.

Die Erfindung wird im Nachstehenden anhand der Zeichnungen erläutert. Es zeigen:
- Figur 1:: Erstes Ausführungsbeispiel einer Vorrichtung zur Ausrichtung eines optischen Sensors in einer
a) perspektivischen Darstellung.
b) Seitenansicht.
- Figur 2:: Zweites Ausführungsbeispiel einer Vorrichtung zur Ausrichtung eines optischen Sensors in einer
a) perspektivischen Darstellung.
b) Seitenansicht.
- Figur 3:: Perspektivische Darstellung eines dritten Ausführungsbeispiels einer Vorrichtung zur Ausrichtung eines optischen Sensors.

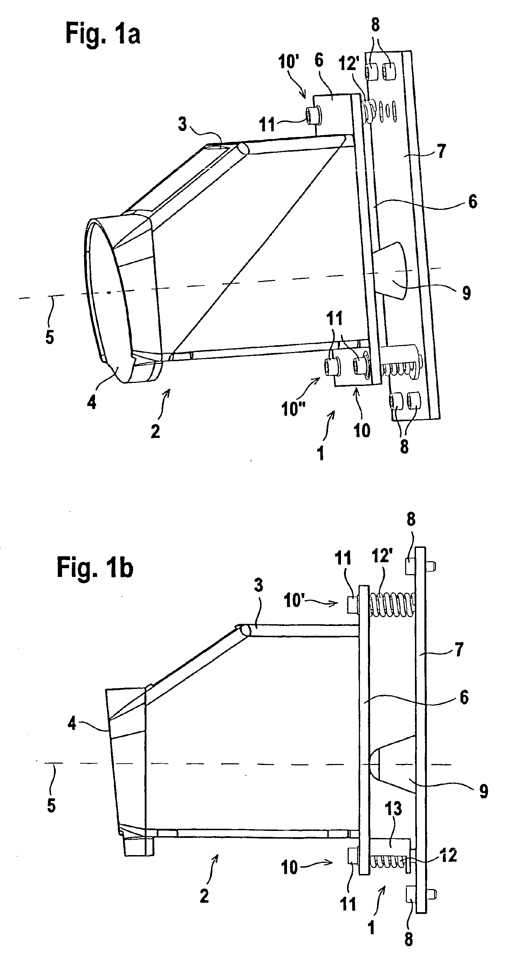

Die Figuren 1a und 1b zeigen ein erstes Ausführungsbeispiel einer Vorrichtung 1 zum Ausrichtung eines optischen Sensors 2. Der optische Sensor 2 ist im vorliegenden Fall als Distanzsensor ausgebildet, dessen nicht gesondert dargestellte optische und elektrische Komponenten in einem Gehäuse 3 sind. Als optische und elektrische Komponenten weist der optische Sensor 2 einen Sendelichtstrahlen emittierenden Sender und einen Empfangslichtstrahlen empfangenden Empfänger auf, welche an eine Auswerteeinheit angeschlossen sind. Der Sender ist beispielsweise von einer Laserdiode gebildet, der Empfänger besteht aus einer Fotodiode oder dergleichen. Die Auswerteeinheit, die von einem Microcontroller oder dergleichen gebildet ist, dient zur Steuerung des Betriebs des Senders und zur Auswertung der am Ausgang des Empfängers anstehenden Empfangssignale. Die Distanzmessung erfolgt bevorzugt nach einem Puls-Laufzeit-Verfahren oder einem Phasenmessverfahren. Die dabei in der Auswerteeinheit ermittelten Distanzwerte werden über einen nicht dargestellten Ausgang des optischen Sensors 2 ausgegeben.

Das Gehäuse 3 weist an seiner Frontseite ein Fenster 4 auf, durch welches die Sendelichtstrahlen und Empfangslichtstrahlen geführt sind. Mittels einer geeigneten Optikanordnung wird eine koaxiale Strahlführung gewährleistet, so dass die Sendelichtstrahlen und Empfangslichtstrahlen entlang einer optischen Achse 5 geführt sind.

Die Vorrichtung 1 zur Ausrichtung des optischen Sensors 2 umfasst eine Taumelplatte 6 sowie eine dieser zugeordnete Platte 7 als Unterlage. Die Taumelplatte 6 und die Platte 7 weisen jeweils einen rechteckigen Querschnitt auf, wobei diese jeweils eine ebene Unter- und Oberseite aufweisen.

Wie aus den Figuren 1a und 1b ersichtlich sitzt das Gehäuse 3 mit seiner dem Fenster 4 abgewandten Rückseite auf der Taumelplatte 6 auf. Dabei ist der Querschnitt der Taumelplatte 6 größer als der Querschnitt des Gehäuses 3, so dass die Randsegmente der Taumelplatte 6 über den Gehäuserand hervorstehen. Im vorliegenden Fall ist die Taumelplatte 6 mittels geeigneter Befestigungsmittel am Gehäuse 3 fixiert. Alternativ bildet die Taumelplatte 6 einen Teil des Gehäuses 3 und ist mit diesem einstückig ausgebildet.

Der Querschnitt der Platte 7 ist größer als der Querschnitt der Taumelplatte 6, so dass die Randsegmente der Platte 7 über die Taumelplatte 6 hervorstehen. Im Bereich dieser Randsegmente wird die Platte 7 von Verankerungsschrauben 8 durchsetzt. Mittels der Verankerungsschrauben 8 kann die Platte 7 an einer Auflage, wie zum Beispiel einer Wand, befestigt werden.

Die Taumelplatte 6 mit dem darauf aufsitzenden optischen Sensor 2 kann zu Justagezwecken bezüglich einem in der optischen Achse 5 des optischen Sensors 2 liegenden Kipppunkt getaumelt, das heißt in ihrem Neigungswinkel relativ zur Platte 7 geändert werden.

Der Kipppunkt ist durch ein Auflageelement definiert, welches im vorliegenden Fall von einem auf der Platte 7 aufsitzenden, und auf dieser fixierten Sockel 9 gebildet ist. Der Sockel 9 und die Platte 7 sind bevorzugt einstückig ausgebildet. Der Sockel 9 weist eine konische Form auf und verjüngt sich zu seinem oberen Ende hin. Das obere Ende des Sockels 9 ist als Kugelsegment ausgebildet. Die Symmetrieachse des rotationssymmetrischen Sockels 9 verläuft in der optischen Achse 5 des optischen Sensors 2. Der obere Scheitelpunkt des Sockels 9 bildet den Kipppunkt, auf welchem die Taumelplatte 6 aufliegt. Durch die kugelförmige Ausbildung des oberen Endes des Sockels 9 kann die dort aufliegende Taumelplatte 6 in unterschiedlichen Richtungen geneigt werden.

Die Taumelplatte 6 ist mit der Platte 7 über Kopplungselemente 10, 10', 10" verbunden. Jedes der Kopplungselemente 10, 10', 10" weist eine Schraube 11 auf, welche die Taumelplatte 6 durchsetzt und welche mit ihrem vorderen Ende in eine Gewindebohrung in der Platte 7 greift. Im vorliegenden Fall sind drei Kopplungselemente 10, 10', 10" mit jeweils einer Schraube 11 vorgesehen. Die Schrauben 11 sind jeweils in einer Ecke der Taumelplatte 6 im Bereich des über das Gehäuse 3 hervorstehenden Randsegmente der Taumelplatte 6 angeordnet. Damit können die Schrauben 11 von der Oberseite der Taumelplatte 6 einfach betätigt werden. In einer Abwandlung der Ausführungsform gemäß den Figuren 1a, 1b sind zwei Kopplungselemente 10, 10" an bezüglich einer Schmalseite der Taumelplatte 6 gegenüberliegenden Ecken angeordnet, während das dritte Kopplungselement 10' im Zentrum der gegenüberliegenden Schmalseite der Taumelplatte 6 liegt.

Zwei der Kopplungselemente 10, 10' weisen zusätzlich eine Feder 12, 12', insbesondere eine aus Metall bestehende Spiralfeder, auf, die von der Schraube 11 der Kopplungselemente 10, 10' durchsetzt wird und zwischen der Taumelplatte 6 und der Platte 7 angeordnet ist. Wie aus den Figuren 1a und 1b ersichtlich sitzt die Feder 12 des Kopplungselements 10 auf dem Boden einer hohlzylinderförmigen Hülse 13 auf, deren oberer Rand an der Unterseite der Taumelplatte 6 befestigt ist. Die Schraube 11 dieses Kopplungselements 10 durchsetzt die Feder 12 und den Boden der Hülse 13.

Die Feder 12' des zweiten Kopplungselements 10' erstreckt sich vom unteren Rand der Taumelplatte 6 bis zum oberen Rand der Platte 7 und wird dabei von der Schraube 11 des Kopplungselements 10' durchsetzt.

Das dritte Kopplungselement 10" weist keine Feder auf und ist allein von der Schraube 11 gebildet.

Zur Justage der Taumelplatte 6 wird entweder das zweite Kopplungselement 10' bestehend aus der Feder 12' und der Schraube 11 oder das dritte Kopplungselement 10" bestehend aus der Schraube 11 betätigt. Bei Betätigen der Schraube 11 des zweiten Kopplungselements 10' wird die Feder 12' zusammengepresst und somit dieses Ende der Taumelplatte 6 gegenüber dem gegenüberliegenden Rand der Taumelplatte 6 in Richtung der Platte 7 abgesenkt. Bei Betätigen der Schraube 11 des ersten Kopplungselements 10 wird die Taumelplatte 6 in diesem Bereich lokal abgesenkt. Gleichzeitig wird durch die Rückstellkraft der Feder 12 des ersten Kopplungselements 10 die Taumelplatte 6 in diesem Bereich etwas nach oben gedrückt.

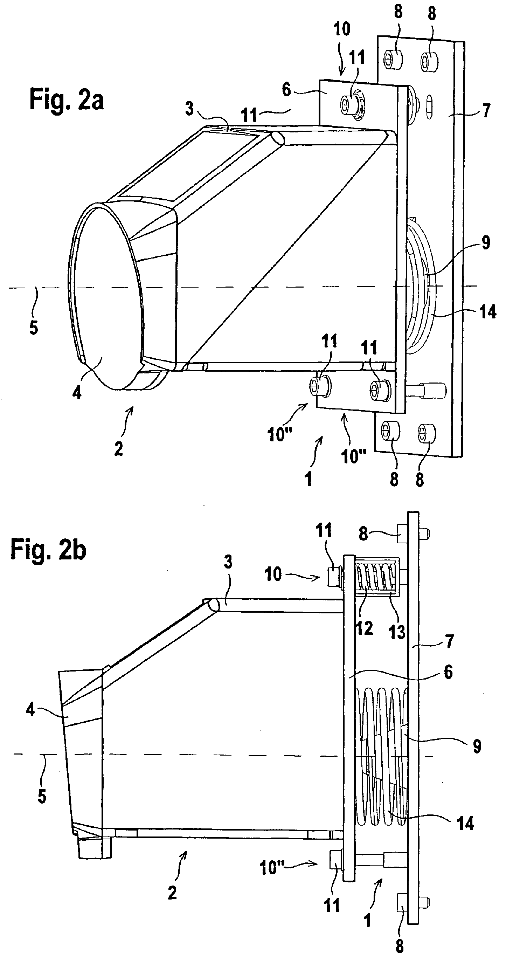

Die Figuren 2a, 2b zeigen ein zweites Ausführungsbeispiel einer Vorrichtung 1 zur Ausrichtung eines optischen Sensors 2. Der optische Sensor 2 sowie die Anordnung der Taumelplatte 6 und der Platte 7 mit dem Sockel 9 als Bestandteile der Vorrichtung 1 entsprechen der Ausführungsform gemäß den Figuren 1a, 1b. In weiterer Übereinstimmung mit der Ausführungsform gemäß den Figuren 1a, 1b weist die Vorrichtung 1 gemäß den Figuren 2a, 2b drei Kopplungselemente 10, 10', 10" auf, mit welchen die Taumelplatte 6 und die Platte 7 verbunden sind.

Im Unterschied zur Ausführungsform gemäß den Figuren 1a, 1b sind bei der Vorrichtung 1 gemäß den Figuren 2a, 2b zwei Kopplungselemente 10" vorgesehen, die allein aus einer Schraube 11 bestehen. Diese Kopplungselemente 10" sind an gegenüberliegenden Ecken einer Schmalseite der Taumelplatte 6 angeordnet. In der Mitte des gegenüberliegenden schmalseitigen Randes der Taumelplatte 6 ist ein Kopplungselement 10 angeordnet, welches aus einer Schraube 11 und einer in einer Hülse 13 gelagerten Feder 12 besteht.

Eine weitere Feder 14, welche wiederum von einer metallischen Spiralfeder gebildet ist, wird von dem Sockel 9 durchsetzt. Dabei liegt der obere Rand der Feder 14 an der Unterseite der Taumelplatte 6 und der untere Rand der Feder 14 an der Oberseite der Platte 7 an.

Zur Neigungsverstellung der Taumelplatte 6 werden die Schrauben 11 der Kopplungselemente 10" betätigt. Bei Eindrehen der Schraube 11 wenigstens eines dieser Kopplungselemente 10" wird die Taumelplatte 6 in diesem Bereich gegen die von der Feder 14 ausgeübte Rückstellkraft nach unten in Richtung der Platte 7 gedrückt. Gleichzeitig wird das gegenüberliegende Ende der Taumelplatte 6 durch die Federkraft der in der Hülse 13 gelagerten Feder 12 des Kopplungselements 10 angehoben.

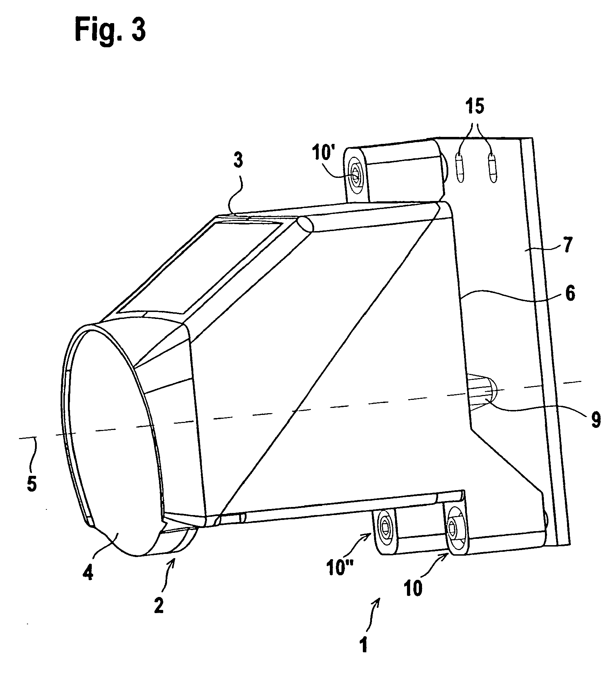

Figur 3 zeigt ein drittes Ausführungsbeispiel einer Vorrichtung 1 zum Ausrichten eines optischen Sensors 2. In diesem Fall ist die Taumelplatte 6 mit dem Gehäuse 3 des optischen Sensors 2 einstückig ausgebildet. Der das Auflageelement bildende Sockel 9 sitzt in diesem Fall an der Unterseite der Taumelplatte 6 auf. Die Ausbildung des Sockels 9 entspricht im Wesentlichen der Ausführungsform gemäß den Figuren 1a,1b. Die Symmetrieachse des Sockels 9 verläuft wiederum in der optischen Achse 5, wobei der in der optischen Achse 5 liegende obere Scheitelpunkt des Sockels 9 den Kipppunkt bildet, auf welchem die Platte 7 aufliegt.

Die Platte 7 ist wiederum an einer Auflage fixierbar. Hierzu sind in die Platte 7 Bohrungen 15 eingearbeitet, in welche die in Figur 3 nicht dargestellten Verankerungsschrauben eingeführt werden können.

Die Anordnung und die Ausbildungen der Kopplungselemente 10, 10', 10" der Vorrichtung 1 gemäß Figur 3 entsprechen der Ausführungsform gemäß den Figuren 1a, 1b. Die Ausrichtung der Vorrichtung 1 gemäß der Figur 3 erfolgt damit analog zum Ausführungsbeispiel gemäß den Figuren 1a,1b.

### Bezugszeichenliste

- (1): Vorrichtung
- (2): Optischer Sensor
- (3): Gehäuse
- (4): Fenster
- (5): Optische Achse
- (6): Taumelplatte
- (7): Platte
- (8): Verankerungsschrauben
- (9): Sockel
- (10): Kopplungselement
- (10'): Kopplungselement
- (10"): Kopplungselement
- (11): Schraube
- (12): Feder
- (12'): Feder
- (13): Hülse
- (14): Feder
- (15): Bohrung

## Patentansprüche

1. Vorrichtung (1) zur Ausrichtung eines optischen Sensors (2), welcher einen in einem Gehäuse (3) integrierten, längs einer optischen Achse (5) Sendelichtstrahlen emittierenden Sender aufweist, mit einer Taumelplatte (6), welche mit dem Gehäuse (3) des optischen Sensors (2) verbunden ist, mit einer Unterlage und einem zwischen dieser und der Taumelplatte (6) angeordneten Auflageelement, wobei die Unterlage oder die Taumelplatte (6) auf einem in der optischen Achse (5) liegenden Kipppunkt des Auflageelements aufliegt, so dass die Taumelplatte (6) um den Kipppunkt relativ zur Unterlage kippbar ist, und mit die Taumelplatte (6) und die Unterlage verbindenden Kopplungselementen (10, 10', 10") zur Fixierung einer Sollposition der Taumelplatte (6) relativ zur Unterlage.

2. Vorrichtung nach Anspruch 1, wobei das Auflageelement von einem auf der Unterlage oder der Taumelplatte (6) aufsitzenden Sockel (9) gebildet ist, wobei der obere Scheitelpunkt des Sockels (9) den Kipppunkt bildet.

3. Vorrichtung nach Anspruch 2, wobei das obere Ende des Sockels (9) von einem symmetrisch zur optischen Achse (5) liegenden Kugelsegment gebildet ist.

4. Vorrichtung nach einem der Ansprüche 1 - 3, wobei die Unterlage von einer Platte (7) gebildet ist.

5. Vorrichtung nach Anspruch 4, wobei der Sockel (9) auf der die Unterlage bildenden Platte (7) aufsitzt und an dieser fixiert ist, und dass die Taumelplatte (6) auf dem den Kipppunkt bildenden Scheitelpunkt des Sockels (9) aufliegt.

6. Vorrichtung nach Anspruch 4, wobei der Sockel (9) auf der Taumelplatte (6) aufsitzt und an dieser fixiert ist, und dass die die Unterlage bildende Platte (7) auf dem den Kipppunkt bildenden Scheitelpunkt der Platte (7) aufliegt.

7. Vorrichtung nach Anspruch 6, wobei die Taumelplatte (6) Bestandteil des Gehäuses (3) des optischen Sensors (2) ist.

8. Vorrichtung nach Anspruch 7, der Sockel (9) einstückig mit der Taumelplatte (6) ausgebildet ist.

9. Vorrichtung nach einem der Ansprüche 1 - 8, wobei die Kopplungselemente (10, 10', 10") von Schrauben (11) gebildet sind.

10. Vorrichtung nach Anspruch 9, wobei die Schrauben (11) die Taumelplatte (6) durchsetzen und in die Unterlage greifen.

11. Vorrichtung nach einem der Ansprüche 9 oder 10, wobei diese drei Kopplungselemente (10, 10', 10") aufweist.

12. Vorrichtung nach einem der Ansprüche 9 - 11, wobei wenigstens ein Kopplungselement (10) eine Feder (12) aufweist, welche von der Schraube (11) des Kopplungselements (10) durchsetzt wird.

13. Vorrichtung nach Anspruch 12, wobei die Feder (12) auf dem Boden einer Hülse (13) aufsitzt, deren oberer Rand an der Unterseite der Taumelplatte (6) fixiert ist.

14. Vorrichtung nach Anspruch 13, wobei die Schraube (11) des Kopplungselements (10) den Boden der Hülse (13) durchsetzt.

15. Vorrichtung nach einem der Ansprüche 12 - 14, wobei ein zweites Kopplungselement (10') eine Feder (12') aufweist, welche von der Schraube (11) des Kopplungselements (10') durchsetzt wird.

16. Vorrichtung nach Anspruch 15, wobei der obere Rand der Feder (12') an der Unterseite der Taumelplatte (6) und der untere Rand der Feder (12') an der Oberseite der Platte (7) anliegt.

17. Vorrichtung nach einem der Ansprüche 12 - 14, wobei der Sockel (9) eine Feder (14) durchsetzt, deren oberer Rand an der Unterseite der Taumelplatte (6) und dessen unterer Rand an der Oberseite der Platte (7) anliegt.

18. Vorrichtung nach einem der Ansprüche 1 - 17, wobei der optische Sensor (2) als Distanzsensor ausgebildet ist.

## Claims

1. Device (1) for aligning an optical sensor (2), which comprises a transmitter, which is integrated in a housing (3) and which emits transmitted light beams along an optical axis (5), which device comprises a wobble plate (6) connected with the housing (3) of the optical sensor (2), a support, a support element arranged between this and the wobble plate (6), wherein the support or the wobble plate (6) rests on a tip point, which lies on the optical axis (5), of the support element so that the wobble plate (6) is tippable relative to the support about the tip point, and coupling elements (10, 10', 10"), which connect the wobble plate (6) and the support, for fixing a desired position of the wobble plate (6) relative to the support.

2. Device according to claim 1, wherein the support element is formed by a pedestal (9) seated on the support or the wobble plate (6), wherein the upper crest point of the pedestal (9) forms the tip point.

3. Device according to claim 2, wherein the upper end of the pedestal (3) is formed by a ball segment disposed symmetrically with respect to the optical axis (5).

4. Device according to one of claims 1 to 3, wherein the support is formed by a plate (7).

5. Device according to claim 4, wherein the pedestal (9) is seated on the plate (7) forming the support and fixed to this and wherein the wobble plate (6) rests on the crest point, which forms the tip point, of the pedestal (9).

6. Device according to claim 4, wherein the pedestal (4) rests on the wobble plate (6) and is fixed thereto and wherein the plate (7) forming the support rests on the crest point, which forms the tip point, of the plate (7).

7. Device according to claim 6, wherein the wobble plate (6) is a component of the housing (3) of the optical sensor (2).

8. Device according to claim 7, wherein the pedestal (9) is formed integrally with the wobble plate (6).

9. Device according to one of claims 1 to 8, wherein the coupling elements (10, 10', 10") are formed by screws (11).

10. Device according to claim 9, wherein the screws (11) pass through the wobble plate (6) and engage in the support.

11. Device according to one of claims 9 and 10, wherein this has three coupling elements (10, 10', 10").

12. Device according to one of claims 9 to 11, wherein at least one coupling element (10) comprises a spring (12) penetrated by the screw (11) of the coupling element (10).

13. Device according to claim 12, wherein the spring (12) is seated at the base of a sleeve (13), the upper edge of which is fixed to the underside of the wobble plate (6).

14. Device according to claim 13, wherein the screw (11) of the coupling element (10) penetrates the base of the sleeve (13).

15. Device according to one of claims 12 to 14, wherein a second coupling element (10') comprises a spring (12') which is penetrated by the screw (11) of the coupling element (10').

16. Device according to claim 15, wherein the upper edge of the spring (12') bears against the underside of the wobble plate (6) and the lower edge of the spring (12') bears against the upper side of the plate (7).

17. Device according to one of claims 12 to 14, wherein the pedestal (9) passes through a spring (14), the upper edge of which bears against the underside of the wobble plate (6) and the lower edge of which bears against the upper side of the plate (7).

18. Device according to one of claims 1 to 17, wherein the optical sensor (2) is constructed as a distance sensor.

## Revendications

1. Dispositif (1) pour aligner un capteur optique (2), lequel présente un émetteur intégré dans un boîtier (3) émettant des rayons lumineux d'émission le long d'un axe optique (5), avec un plateau oscillant (6) qui est relié au boîtier (3) du capteur optique (2), avec un support et un élément d'appui disposé entre ce support et le plateau oscillant (6), le support ou le plateau oscillant (6) reposant sur un point de basculement de l'élément d'appui situé sur l'axe optique (5) de telle manière que le plateau oscillant (6) puisse être basculé par rapport au support autour du point de basculement, et avec des éléments de couplage (10, 10', 10") reliant le plateau oscillant (6) et le support pour fixer une position de consigne du plateau oscillant (6) par rapport au support.

2. Dispositif selon la revendication 1, l'élément d'appui étant formé d'un socle (9) posé sur le support ou le plateau oscillant (6), le sommet supérieur du socle (9) formant le point de basculement.

3. Dispositif selon la revendication 2, l'extrémité supérieure du socle (9) étant formée d'un segment sphérique symétrique par rapport à l'axe optique (5).

4. Dispositif selon l'une des revendications 1 à 3, le support étant formé d'une plaque (7).

5. Dispositif selon la revendication 4, le socle (9) étant posé sur la plaque (7) formant le support et fixé sur celle-ci, et le plateau oscillant (6) reposant sur le sommet du socle (9) formant le point de basculement.

6. Dispositif selon la revendication 4, le socle (9) étant posé sur le plateau oscillant (6) formant le support et fixé sur celui-ci, et la plaque (7) formant le support reposant sur le sommet de la plaque (7) formant le point de basculement.

7. Dispositif selon la revendication 6, le plateau oscillant (6) faisant partie intégrante du boîtier (3) du capteur optique (2).

8. Dispositif selon la revendication 7, le socle (9) étant formé d'une seule pièce avec le plateau oscillant (6).

9. Dispositif selon l'une des revendications 1 à 8, les éléments de couplage (10, 10', 10") étant formés de vis (11).

10. Dispositif selon la revendication 9, les vis (11) traversant le plateau oscillant (6) et mordant dans le support.

11. Dispositif selon l'une des revendications 9 ou 10, celui-ci présentant trois éléments de couplage (10, 10', 10").

12. Dispositif selon l'une des revendications 9 à 11, au moins un élément de couplage (10) présentant un ressort (12), lequel est traversé par la vis (11) de l'élément de couplage (10).

13. Dispositif selon la revendication 12, le ressort (12) étant posé sur le fond d'une douille (13) dont le bord supérieur est fixé sur la face inférieure du plateau oscillant (6).

14. Dispositif selon la revendication 13, la vis (11) de l'élément de couplage (10) traversant le fond de la douille (13).

15. Dispositif selon l'une des revendications 12 à 14, un deuxième élément de couplage (10') présentant un ressort (12'), lequel est traversé par la vis (11) de l'élément de couplage (10').

16. Dispositif selon la revendication 15, le bord supérieur du ressort (12') portant sur la face inférieure du plateau oscillant (6) et le bord inférieur du ressort (12') portant sur la face supérieure de la plaque (7).

17. Dispositif selon l'une des revendications 12 à 14, le socle (9) traversant un ressort (14) dont le bord supérieur porte sur la face inférieure du plateau oscillant (6) et le bord inférieur porte sur la face supérieure de la plaque (7).

18. Dispositif selon l'une des revendications 1 à 17, le capteur optique (2) étant réalisé sous la forme d'un capteur de distance.
